# EUROPEAN PATENT SPECIFICATION

(11) **EP 0 908 331 B1**
(45) Date of publication and mention of the grant of the patent: **04.01.2006**
(21) Application number: 98308070.6
(22) Date of filing: 05.10.1998
(51) Int. Cl.: B60C 23/06

(54) **Apparatus for alarming decrease in tyre air-pressure and method thereof**
Gerät und Verfahren zum Detektieren eines Druckabfalles im Reifen
Appareil et procédé concernant la détection d'une baisse de pression dans un pneumatique

(30) Priority: 06.10.1997 JP 27305597; 10.06.1998 JP 16173298
(43) Date of publication of application: 14.04.1999
(73) Proprietor: Sumitomo Rubber Industries Ltd., Kobe-shi, Hyogo-ken (JP); SUMITOMO ELECTRIC INDUSTRIES, LTD, Osaka-shi, Osaka-fu 541 (JP)
(72) Inventor: Yanase, Minao, Kobe-shi, Hyogo-ken (JP); Horie, Hiroto, Akashi-shi, Hyogo-ken (JP)
(74) Representative: Manitz, Finsterwald & Partner GbR

(56) References cited:
- EP-A- 0 650 856
- EP-A- 0 652 121
- EP-A- 0 724 974

## Description

The present invention relates to an apparatus for alarming decrease in tyre air-pressure and a method thereof. More particularly, it relates to an apparatus for alarming decrease in tyre air-pressure and a method thereof by which a decrease in internal pressure of an actually running tyre can be reliably determined and alarm can be given accordingly based on rotational information of right and left tyres of different types preliminarily attached to a drive axle or shaft, e.g. a new tyre and a worn tyre.

Determination of loss of pressure based on relative comparison of the number of revolutions of tyres has conventionally been performed by storing ratios of number of revolutions of each tyre at the time of straight-ahead driving, corresponding to variations in number of revolutions at the time of fitting new tyres and by correcting the measured numbers of revolutions of tyres to determine pressure loss. However, while this method is based on a presupposition that the corrected values are not dependent on running speeds, relative speed differences that are dependent on speed are actually generated between driving wheels and following wheels owing to factors such as air resistance.

In other words, at the time of running at a high speed, driving force is acting on the driving wheels to overcome air resistance although the vehicle is running at a constant speed and so the wheel speed difference between driving wheels and following wheels becomes larger than compared to when the vehicle is running at a low speed.

However, while such changes are corrected by a function of speed in prior art methods, the whole theory is based on a presupposition that both the tyres or the driving wheels are of the same type.

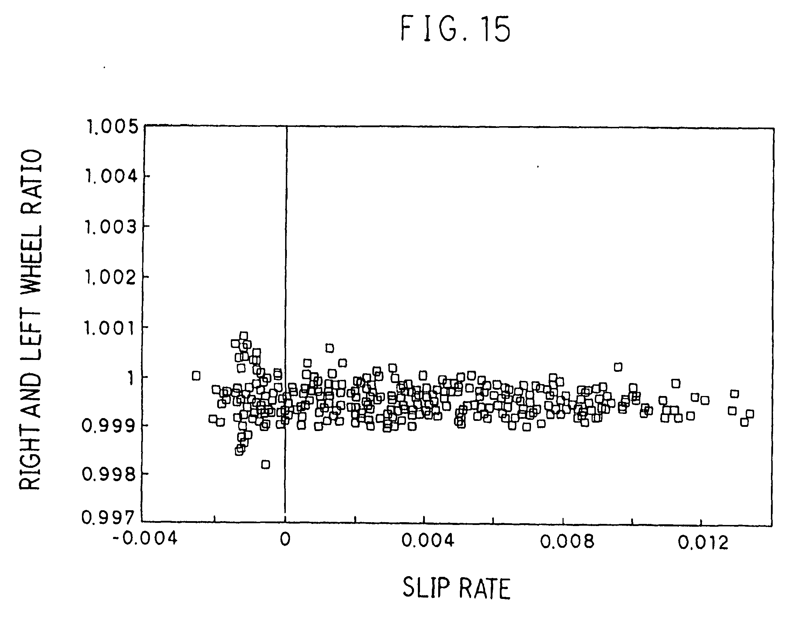

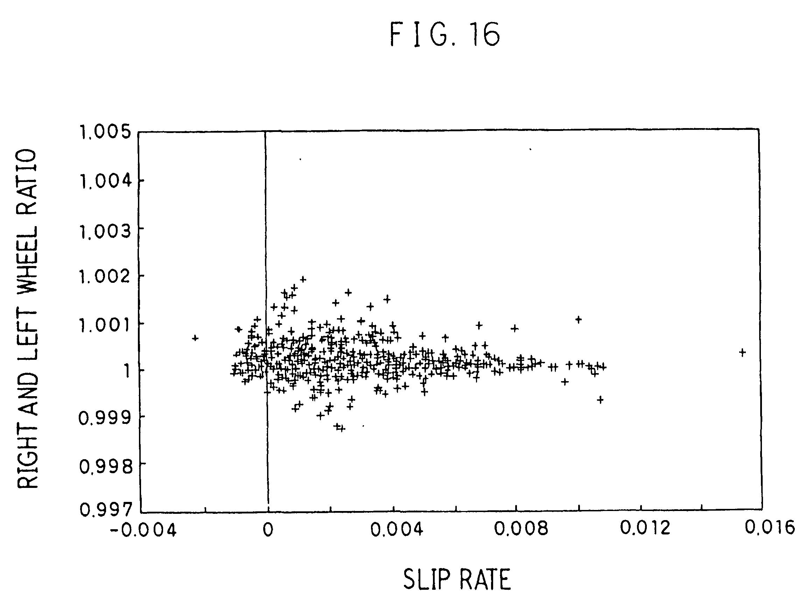

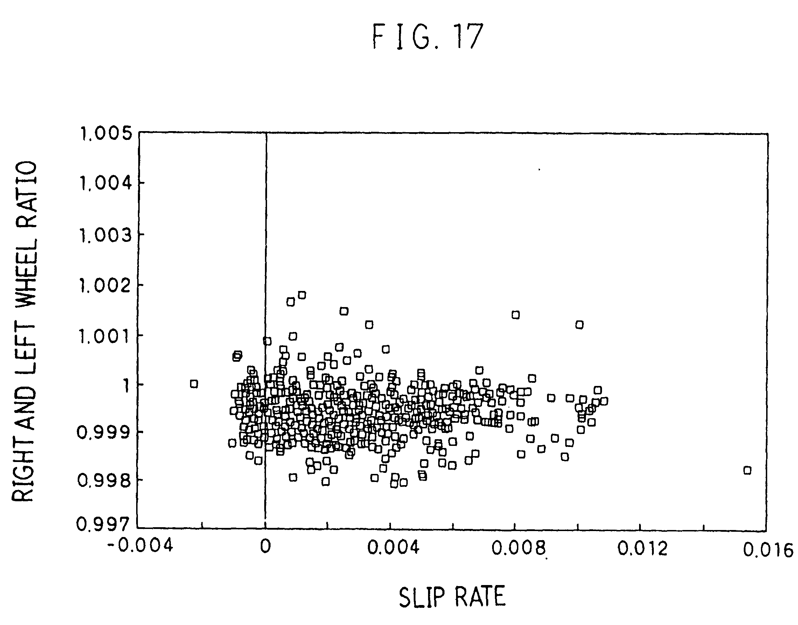

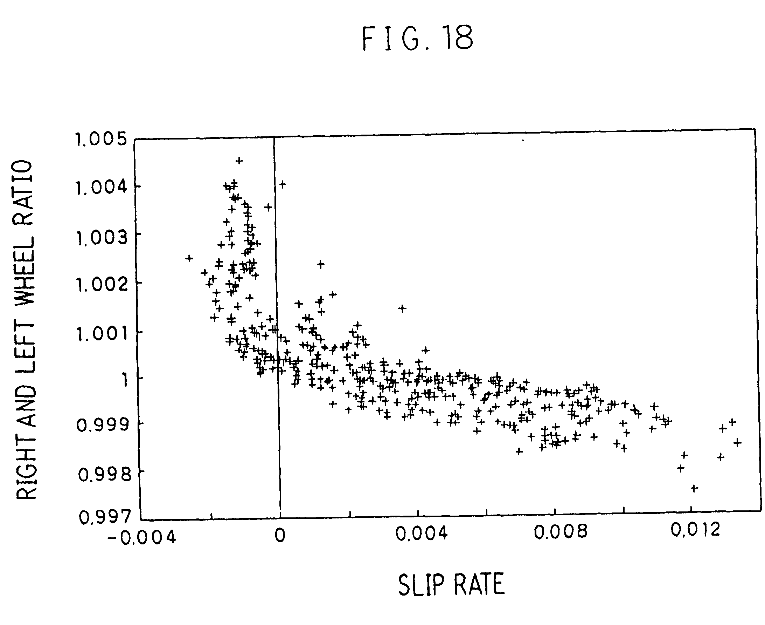

For instance, in the case where right and left wheels at normal air pressure are of the same type (and their degrees of wear are also substantially identical), the relative speed ratio of the right and left tyres with respect to the slip rate (driving force) of the tyre is substantially constant, and the right and left wheel ratios of the following wheels and driving wheels are not affected by driving/braking as shown in Figures 15 and 16. Further, as shown in Figure 17, in the case where a blowout of one of the tyres of the following wheels has occurred with the degree of wear having progressed to some extent, and this is exchanged with a spare tyre, the right and left wheel ratios of the following wheels will not be affected by the driving force. On the other hand, in the case where a blowout of one of the tyre of the driving wheels has occurred and is exchanged with a spare tyre so that the driving shaft bears tyres of different degrees of wear, and the vehicle is running at a high speed, the driving wheels will of course be faster than the following wheels in terms of wheel speed, and the difference in degrees of wear between right and left driving wheels will further result in a right and left wheel ratio that is obviously sloped or changed with respect to the slip rate as shown in Figure 18, and relative difference in wheel speed between right and left tyres will be generated by the action of the driving force or braking force. Since such relative differences are not at all considered in prior art determining methods for loss of pressure, they affect determined values of pressure loss, resulting in erroneous alarm or in a failure to alarm. Thus, in the case where tyres of different degrees of wear are attached to the driving shaft and right and left wheel ratio is sloped with respect to the driving force, there exists a danger that an erroneous alarm signal is given during driving or braking although the air-pressure is normal.

On the other hand, a method is described in which the relationships between front and rear wheel ratios and speeds are preliminarily stored and employed for correction at the time of actual running (refer to Japanese Unexamined Patent Publication No 137512/1995). However, this method is trying to correct front and rear wheel ratios at the time of actual running by preliminarily storing the phenomenon that the driving wheels rotate faster with increase of the driving speed of the vehicle even at a constant driving speed, since driving force to overcome running resistant is required. Thus, if tyres of driving wheels are intermediately exchanged, no correction of favourable accuracy can be performed.

Document EP-A-0 724 974 discloses a tyre pressure drop alarm device which is capable of inhibiting a judgment of a tyre pressure drop by judging the situation where the vehicle is travelling on a one-sided irregular road. Such a judgement is done by determining a time differential value of a front/rear wheel ratio of the rotational angular velocities of left and right tyres, respectively, and determining a difference or ratio between the obtained values. The travelling condition which varies due to the road condition between left an right sides is then judged my means of the determined difference or ratio.

Document EP-A-0 650 856 discloses a system for determining a pneumatic tyre pressure of road wheels on a motor vehicle which determines a tyre pressure reduction even when running conditions of the motor vehicle change such as when the motor vehicle makes a turn by means of a rotational speed difference between rotational speeds of front and rear road wheels of a motor vehicle being weighted by a first ratio and the difference between the rotational speed difference between rotational speeds of front left and right road wheels and an average signal of reference steering angle or between the rotational speed difference between rotational speeds of rear left and right road wheels and the average signal of reference steering angle being weighted by a second ratio.

It is an object of the present invention to provide an apparatus for signalling or alarming a decrease in tyre air-pressure and a method thereof with which erroneous alarm or failure to alarm can be prevented.

This object is achieved by the features of apparatus claim 1 and the features of method claim 5, respectively.

Further aspects of the invention will be apparent from the following description, by way of example only, of embodiments in conjunction with the attached diagrammatic drawings in which:
Figure 1 is a block diagram showing one embodiment of an apparatus for signalling or alarming decrease in tyre air-pressure according to the present invention;
Figure 2 is a block diagram showing electric arrangements of the apparatus for alarming decrease in tyre air-pressure of Figure 1;
Figure 3 is a diagram showing relationships between slip rates and determined values;
Figure 4 is a diagram showing relationships between slip rates and determined values after correction by using the slip rates;
Figure 5 is a diagram showing relationships between relative speed ratios of right and left tyres of different types of driving wheels (hereinafter referred to as "right and left wheel ratios") and driving force/braking force;
Figure 6 is a diagram showing relationships between right and left wheel ratios of right and left tyres of different types of following wheels and vehicle speed;
Figure 7 is a diagram showing relationships between right and left wheel ratios of right and left tyres of different types of following wheels and slip rates;
Figure 8 is a diagram showing averaged values of right and left wheel ratios and correction values corrected by a quadratic function for correction for vehicle speeds according to Embodiment 2;
Figure 9 is a diagram showing determined values employing averaged values of right and left wheel ratios and determined values in which the right and left wheel ratios have been corrected by the quadratic function for the vehicle speed;
Figure 10 is a diagram showing relationships between right and left wheel ratios of right and left tyres of different types of driving wheels, vehicle speed;
Figure 11 is a diagram showing relationships among right and left wheel ratios of right and left tyres of different types of driving wheels, vehicle, speed, and driving force;
Figure 12 is a diagram showing corrected values as corrected by the function for correction according to Embodiments 1 and 3;
Figure 13 is a diagram showing determined values in which right and left wheel ratios have been corrected based on driving force only and determined values in which right and left wheel ratios have been corrected by a linear combination function of a quadratic function for the vehicle speed and a linear function for the driving force;
Figure 14 is a flowchart of Embodiments 2 and 3;
Figure 15 is a diagram showing relationships between right and left wheel ratios of right and left tyres of the same type of following wheels and slip rates;
Figure 16 is a diagram showing relationships between right and left wheel ratios of right and left tyres of the same type of driving wheels and slip rates;
Figure 17 is a diagram showing relationships between right and left wheel ratios of right and left tyres of different types of following wheels and slip rates; and
Figure 18 is a diagram showing relationships between right and left wheel ratios of right and left tyres of different types of driving wheels and slip rates.

### EMBODIMENT 1

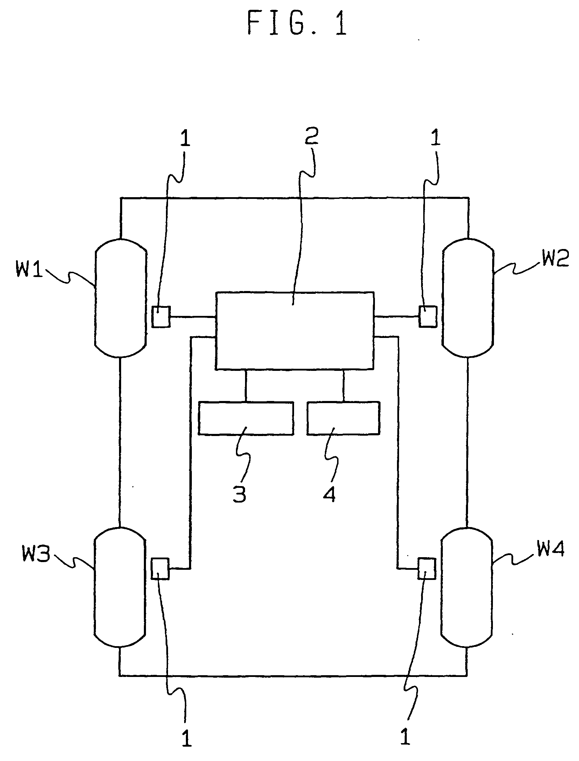

As shown in Figure 1, the apparatus for alarming decrease in air-pressure detects whether the air-pressure of any of the four wheels W₁, W₂, W₃, W₄ (hereinafter referred to as "Wᵢ") attached to a four-wheeled vehicle has decreased or not, and includes wheel speed sensors 1 of normal arrangement respectively arranged in connection with each of the tyres Wᵢ. Each wheel speed sensor 1 detects rotational information for a tyre, e.g. the number of rotations, the revolution speed or the angular speed. Outputs of the wheel speed sensors 1 are supplied to a control unit 2. To the control unit 2, there are connected a display means 3 comprising a crystal display element, plasma display element, CRT, lamp or sound generator for informing a driver of a tyre Wᵢ the air-pressure of which has decreased, and an initialising switch 4 which can be operated, for instance, by the driver.

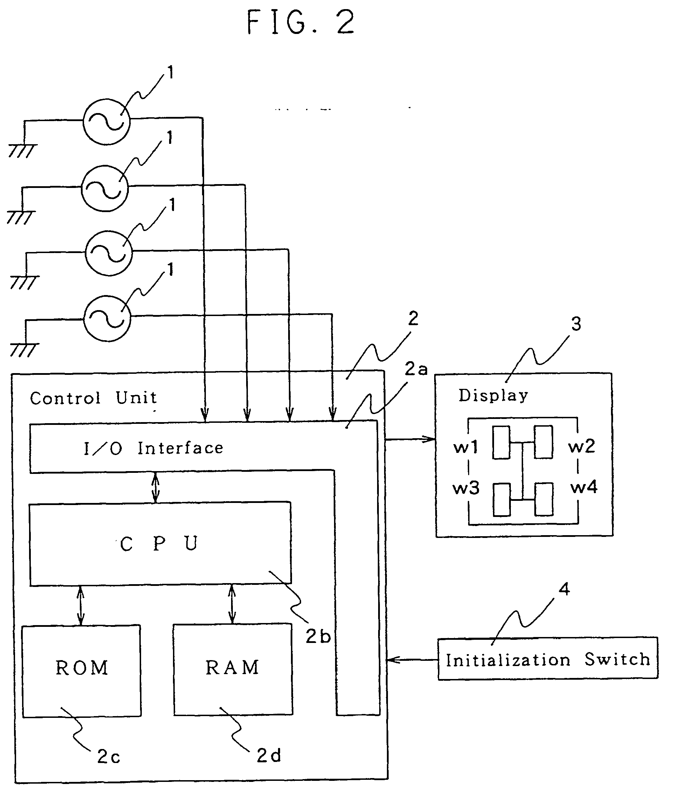

The control unit 2 comprises a storing means for storing the rotational information of each tyre Wᵢ and relationships between right and left wheel ratios of right and left tyres of the tyres which may be of different types which have been preliminarily set to be at normal air-pressure and driving force, a calculating and processing means for calculating determined values from the rotation information of each tyre Wᵢ, and a determining means for correcting the right and left wheel ratios of the driving wheels at the time of actual running based on the relationship between the right and left wheel ratios of right and left tyres of different types and driving force and for determining decrease in internal pressure of a tyre. As shown in Figure 2, the control unit 2 is composed of an I/O interface 2a required for sending/receiving signals to/from an external device, a CPU 2b which functions as a calculation centre, a ROM 2c which stores a control operation program for the CPU 2b, and a RAM 2d into which data is temporarily written and from which it is read out when the CPU 2b performs control operations.

Right and left tyres of different types which have been set to be at normal air-pressure might, for instance, be a new tyre and a worn tyre the degree of wear of which can be 50%, or two types of tyres of which the front and rear rigidity vary, e.g. a summer tyre and a winter tyre.

Next, the present invention will be explained based on a case in which a new tyre and a worn tyre are attached to the driving shaft of a rear wheel driven vehicle (FR vehicle).

Let us consider a case in which tyres of the same type are attached under a condition as shown in Table 1 to perform initialisation. Initialisation is performed without setting any particular methods for running but is performed by actually running on general road, and the system periodically calculates a revolution speed for each tyre Wᵢ during these procedures. It should be noted that each tyre is manufactured with variations (initial differences) which are tolerated within a certain standard and so the effective turning radius of each tyre Wᵢ might not necessarily be identical so that the revolution speeds Vᵢ of all tyres Wᵢ might not be identical even under normal air pressure. Therefore revolution speeds V1ᵢ after correction of the variations owing to initial differences are calculated by the following equations (1) to (4). $V {1}_{1} = {V}_{1}$ $V {1}_{2} = {mV}_{2}$ $V {1}_{3} = {V}_{3}$$V {1}_{4} = {nV}_{4}$

The coefficient m is obtained as a right and left wheel ratio of the right and left tyres of the following wheels (V₁/V₂), and the coefficient n as a right and left wheel ratio of the right and left tyres of the driving wheels (V₃/V₄). The right and left wheel ratios obtained at this time are averaged values of values periodically calculated under various running conditions during initialisation. Then, a determined value is calculated based on the revolution speed V1ᵢ. This determined value is obtained form the following equation (5) in the case where the difference between two diagonal sums is set to be the determined value (DEL value). $DEL = \frac{\frac{V {1}_{1} + {Vl}_{4}}{2} - \frac{V {1}_{2} + {Vl}_{3}}{2}}{\frac{V {1}_{2} + {Vl}_{2} + V {1}_{3} + V {1}_{4}}{4}} \times 100$

**TABLE 1**

| | |
|---|---|
| SAMPLE VEHICLE | FR VEHICLE |
| TYRE SIZE | 245/60R16 |
| NUMBER OF PASSENGERS | 2 |

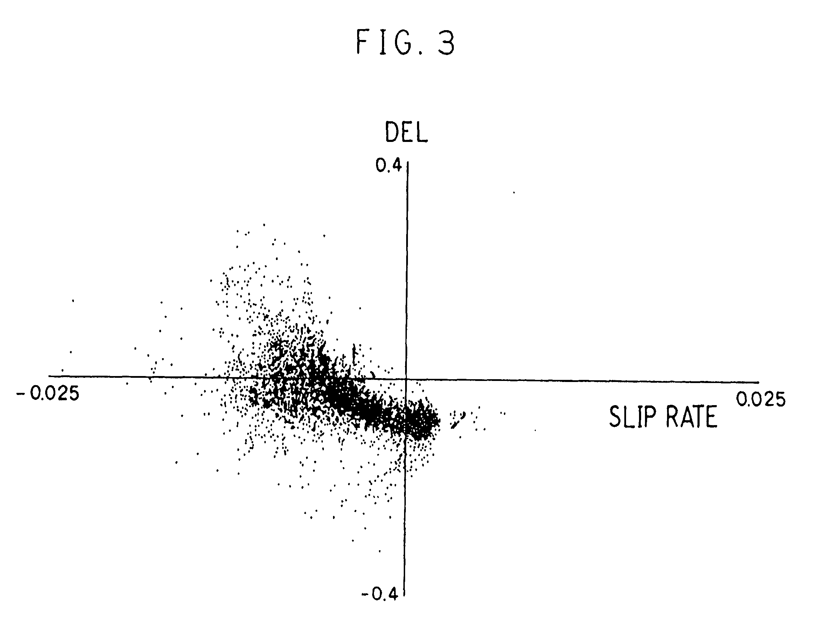

Next, consider the case where a blowout of one of the driving wheels has occurred after the vehicle has been running for some time and for the four tyres which are then worn by approximately 40%, the right tyre of the driving wheels is exchanged for a new spare tyre. At this time, the right and left wheel ratios m, n are non-ambiguously obtained as averaged values of various running conditions. When DEL values are obtained through driving at various driving conditions with the use of such ratios, an erroneous alarm is apt to occur when the driving force or braking force is large although the tyres are all at normal pressure, since the DEL values are sloped with respect to the slip rates as shown in Figure 3. This is because relative speed differences (fluctuations with respect to 1) occur for the right and left ratios V₃/V₄ of the right and left tyres of the driving wheels, as shown in Figure 18.

Thus, right and left wheel ratios due to driving force generated at the time of actual running are corrected and a decrease in internal pressure of a tyre is determined in the present invention by preliminarily storing how the right and left wheel ratios of right and left tyres of different types of the driving wheels which have been set to be at normal air-pressure vary by the influence of driving force.

In other words, it is general that initialisation is performed at the time of exchanging a tyre in a system for determining loss of pressure based on differences in relative wheel speed of tyres, so that slip rates are calculated by sampling front and rear wheel ratios simultaneously with sampling of wheel speed data at the time of actual running, and it is then obtained how the right and left wheel ratios of tyres of different types of driving wheels vary upon influence of driving force (which is expressed by a slip rate calculated by (front and rear wheel ratio - 1)).

At this time, the right and left wheel ratio (V₃/V₄) is made, upon conversion of the slip rate and Figure 18, to be (constant) • (slip rate) = (constant) • (front and rear wheel ratio - 1), and is regressed as a linear function of the front and rear wheel ratios (V₃+V₄) / (V₁+V₂) as in the following equation (6). $\frac{{V}_{3}}{{V}_{4}} = A ( \frac{{V}_{3} + {V}_{4}}{{V}_{1} + {V}_{2}} ) + B$

Note that A and B are constants.

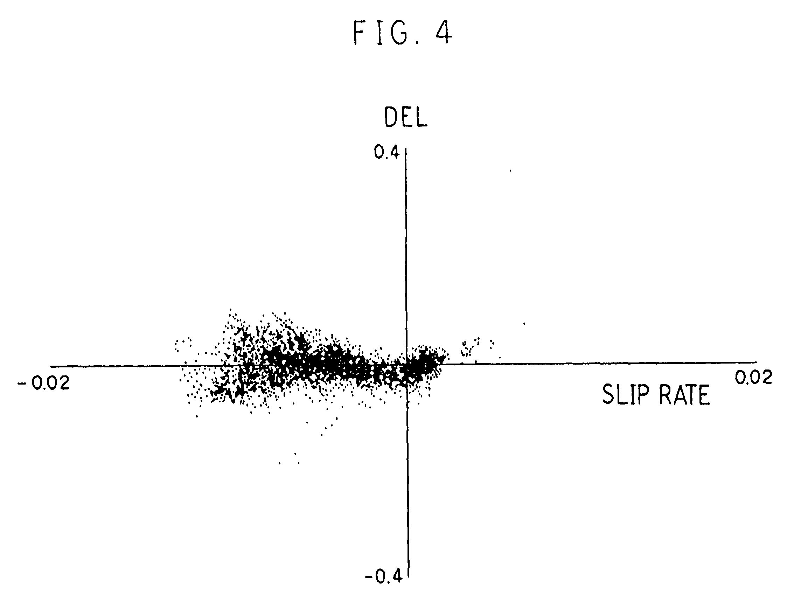

Since the right and left wheel ratios after completion of initialisation are obtained from equation (6), when equation (6) is assigned into equation (5), the DEL values by which the right and left wheel ratios of the driving wheels are corrected by slip rates will no longer be sloped with respect to the slip rates as shown in Figure 4, whereby erroneous alarm can be eliminated even when the driving force/braking force is large.

While the present embodiment has been explained by taking the case of a FR vehicle, the right and left wheel ratios (V₁/V₂) of the driving wheels of a FF vehicle will be regressed as a linear function of the front and rear wheel ratios (V₁+V₂) / (V₃+V₄) as in the following equation (7), so that the DEL values can also be corrected for the slip rates by assigning equation (7) into equation (5), similarly to the case of a FR vehicle. $\frac{{V}_{1}}{{V}_{2}} = A ( \frac{{V}_{1} + {V}_{2}}{{V}_{3} + {V}_{4}} ) + B$

It should be noted that the reason for setting definitions of front and rear wheel ratios to (V₃+V₄) / (V₁+V₂) in the case of a FR vehicle and (V₁+V₂ / (V₃+V₄) in the case of a FF vehicle is that the slip rate is defined to be (front and rear wheel ratio - 1) and driving wheel side needs to be the numerator in order to make the driving force side be consistently positive.

According to the present embodiment, the right and left wheel ratios of driving wheels at the time of running can be accurately corrected since there is a preliminarily stored, for example, from initialisation under actual running performed when a tyre has been exchanged, how the right and left wheel ratios of right and left tyres of different types of driving wheels and slip rates due to driving force vary. Consequently, the accuracy of determining decrease in internal pressure of a tyre is improved and erroneous alarm or failure in alarm can be prevented.

Next, an embodiment of the present invention will be explained based on an example thereof, while the present invention is not limited to such an example only.

### EXAMPLE

The case of a blowout of a tyre in the right-hand side of the driving wheels is considered when the tyres of the driving wheels of a FR vehicle are worn by approximately 50%.

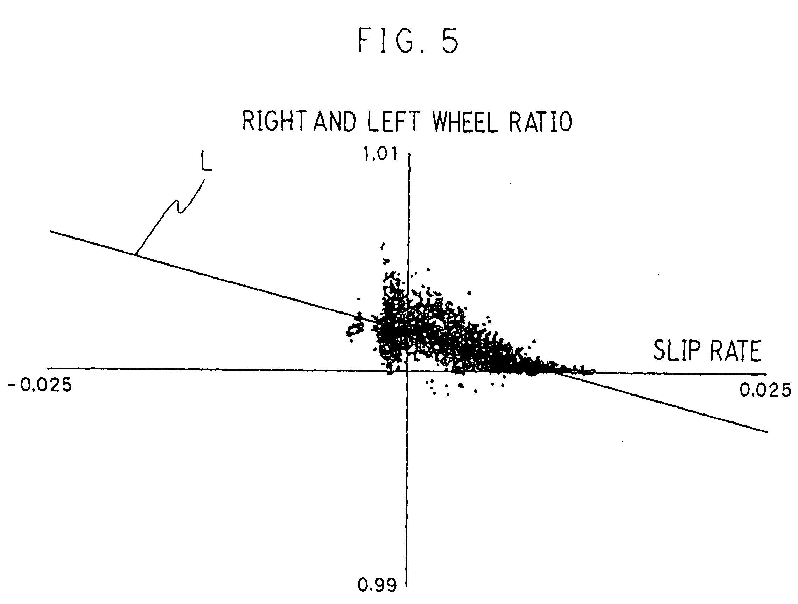

The driver exchanges the tyre on the right-hand side of the driving wheels with a new tyre. At this time, tyres of different types and of different degrees of wear are concurrently used for the driving wheels. In a system for detecting decrease in tyre air-pressure based on relative comparison of wheel speeds, initialising operations are performed in order to correct differences in outer diameter of the tyres. As described earlier, these operations measure the right and left wheel ratios of tyre dynamic load radiuses at normal air-pressure. In the case where the degrees of wear of right and left tyres are substantially equal, the right and left wheel ratios are constant, irrespective of driving force or braking force (driving force/braking force) or the revolution speed, and are corrected by the equations (1) to (4). However, in the case where the degrees of wear differ between right and left tyres of the driving wheels, the right and left wheel ratios of the driving wheels are dependent on the magnitude of driving force/braking force. Thus, the system obtains the right and left wheel ratios of the driving wheels as a function of the driving force/braking force. The system performs sampling of right and left wheel ratios of wheel speeds and (front and rear wheel ratio - 1) in a second as one data, and a specified number of data are obtained. The results are shown in Figure 5.

In the case where the degrees of wear between the right and left wheels are substantially identical, these data are distributed in a substantially horizontal manner; however, in the case where the degrees of wear between the right and left wheels are different as in the present example, they are sloped as shown in Figure 5. By regressing these as a straight line (linear function) L, coefficients A and B of equation (6) are obtained. It should be noted that when the vehicle is of FF type, coefficients A and B of equation (7) are obtained.

In the present example, A was -0.178023 and B 1.179873. Thus, the right and left wheel ratio of the driving wheels N (V₃/V₄) will be as follows. $n = - 0.178023 \times ( {V}_{3} + {V}_{4} ) / ( {V}_{1} + {V}_{2} ) + 1.179873$

Initialisation is completed when the right and left wheel ratio m of the following wheels (V₁/V₂) and right and left wheel ratio n of the driving wheels (V₃/V₄) are obtained.

The processes for determining pressure loss will now be explained. First, the system performs sampling of wheel speeds V₁, V₂, V₃ and V₄ every second. It is preferable that data including many errors are omitted at this time. Then, correction is performed based on equations (1) to (4) by employing right and left wheels ratios m, n.

The determined value DEL is calculated in accordance with equation (5), compared with a set threshold, and if this is exceeded, an alarm is given.

### EMBODIMENT 2

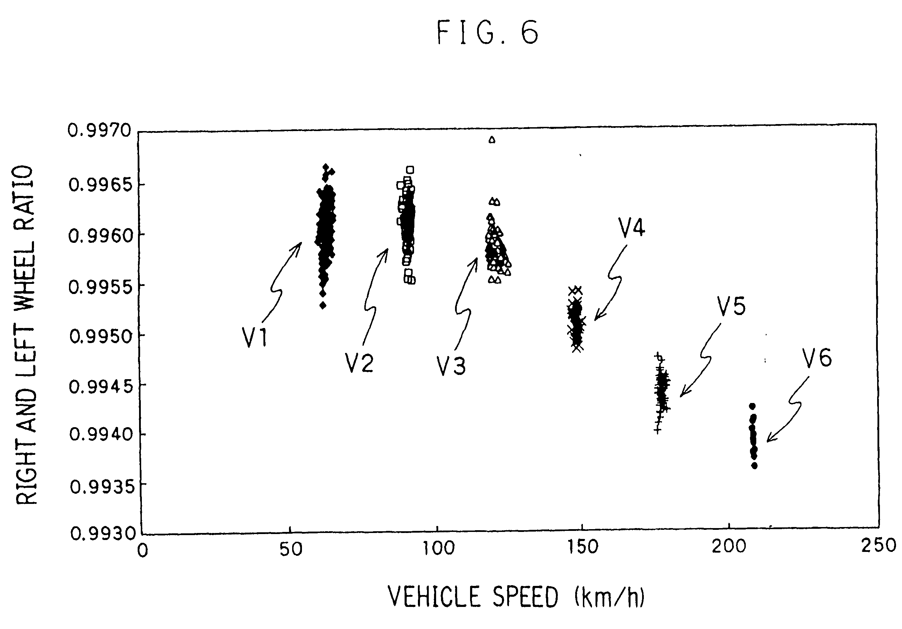

Another embodiment of the present invention will now be explained. As shown in Figure 6, driving tests were performed with a rear wheel driving vehicle (FR vehicle) having right and left tyres of different types, namely a new tyre and a worn tyre, and the driving speed-is increased from 60 Km/hour by 30 Km/hour steps up to a speed of 210 Km/hour (V₁ to V₆). The right and left wheel ratios are substantially constant as long as the vehicle speed is not more than approximately 120 Km/hour. However, when the vehicle speed exceeds approximately 120 Km/hour, the right and left wheel ratios of the following wheels become shifted (not constant) due to the different tyres.

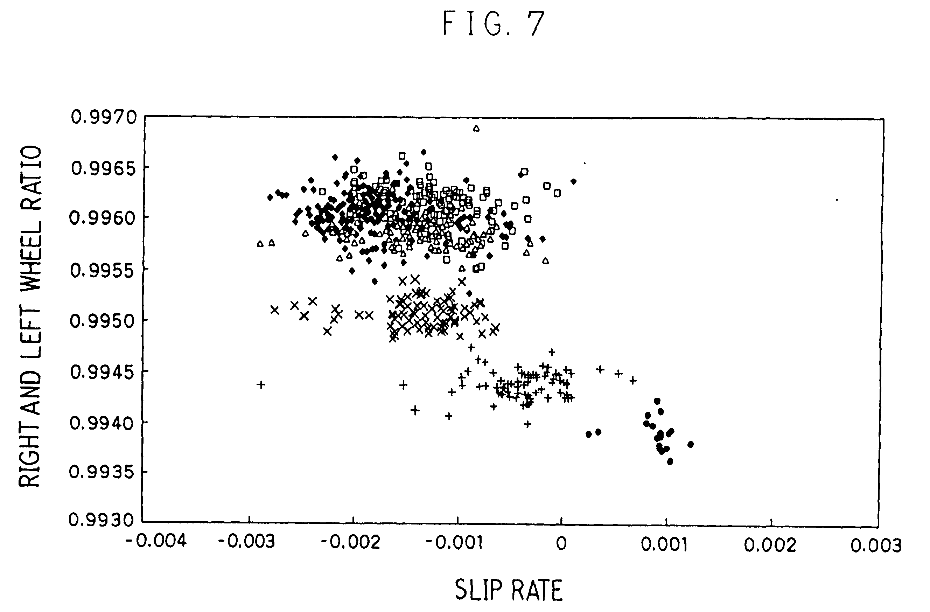

Thus, it can be understood that the right and left wheel ratios of the following wheels are correlated as squares of the vehicle speed, as shown in Figure 6. This can be explained by the fact that tyres which differ in degrees of wear on the right and left side cause differences in centrifugal force acting on the right and left tyres since there exist differences in tread weight and thus result in a correlation of the right and left differences to a square of speed. However, as shown in Figure 7, it can be understood that the right and left wheel ratios are not dependent on the driving force (corresponding to relative slip rates) expressed as slip rates calculated from (front and rear wheel ration --1). Thus, the correction values for the right and left wheel ratios of the following wheels are obtained from a quadratic function for the vehicle speed in the present embodiment. However, since a slop of 0 is also acceptable when the vehicle speed is 0, if the linear coefficient is set to be 0 for ease of correction, the following equation (8) will be obtained. $Vnr = Vnr \times ( Kna \times {Vmean}^{2} + Knb )$

Note that
- Vnr:: revolution speed of the right tyre of the following wheels
- Vmeans:: averaged value for revolution speeds of the four tyres
- Kna:: quadratic correction coefficient for the vehicle speed
- Knb:: zero-order correction coefficient for the vehicle speed

The correction coefficients Kna, Knb can be obtained by regressing (Kna× Vmean²+Knb) as a linear function of Vmean.

That is, calculation of the correction coefficients may be obtained from the following equation (9). $\begin{matrix}Kna = ( N \times Snxy - Snx \times Sny ) - ( N \times Snx 2 - Snx \times Snx ) & } \\ Knb = ( sny - Kna \times Snx ) / N & }\end{matrix}$

Note that
- N:: number of data
- Snx:: integrated value of a square of the vehicle speed
- Sny:: integrated value of Vnl/Vnr
- Snxy:: integrated value of a product of a square of the vehicle speed and Vnl/Vnr
- Snx2:: integrated value of the vehicle speed multiplied by four
- Vn1:: revolution speed of the left tyre of the following wheels
- Vnr: revolution speed of the right tyre of the following wheels

It should be noted that the equations for correction corresponding to the equation (2) of Embodiment 1 are expressed by the following equations (10), (11).$Vnr = Vnr \times Ka$ $Ka = Sny / N$

Note that
- Vnr:: revolution speed of the right tyre of the following wheels
- Ka:: Correction coefficient
- N:: number of data
- Sny:: integrated value of Vnl/Vnr

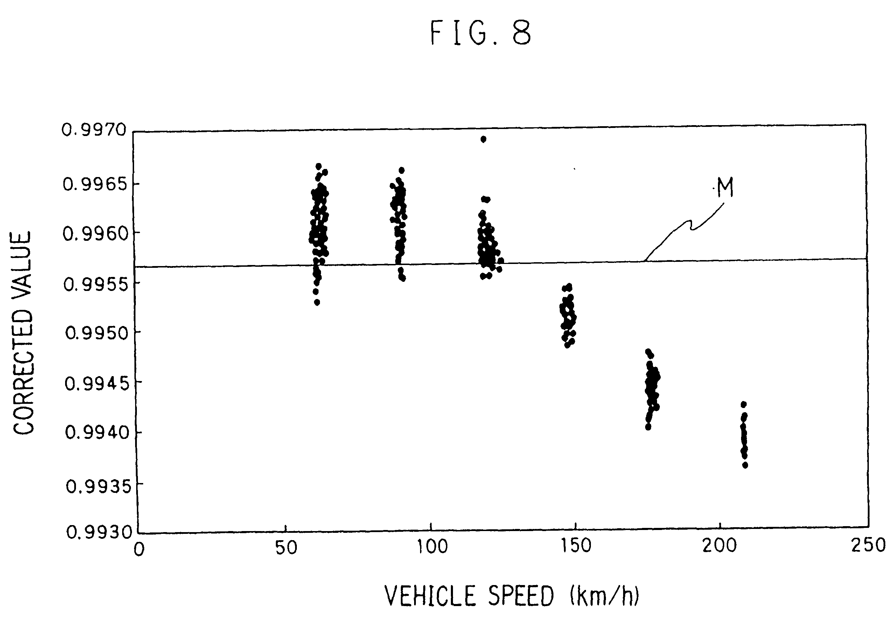

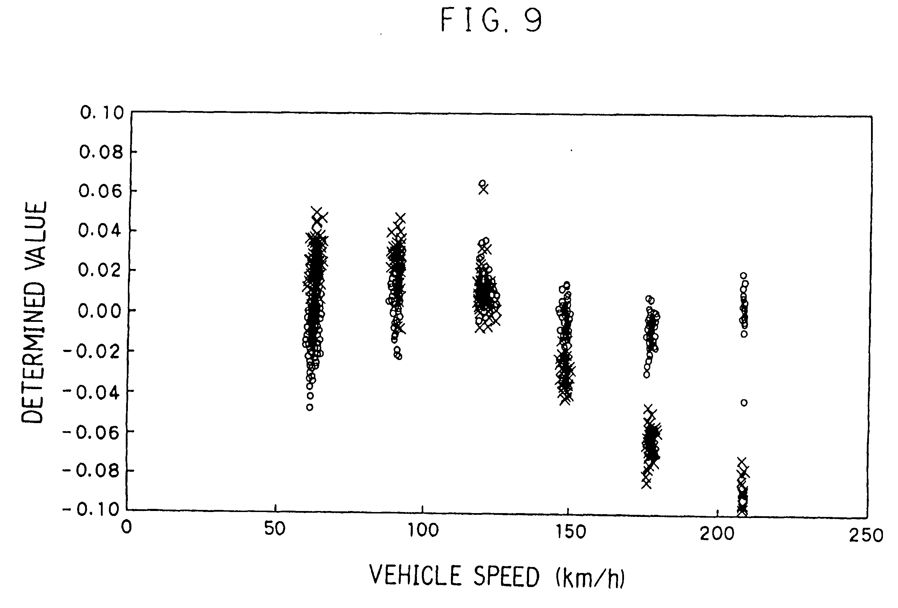

Thus it can be understood from Figure 8 showing averaged values of right and left wheel ratios which are correction coefficients in Embodiment 1 and correction values corrected by a quadratic function for correction for vehicles speeds according to the present embodiment and From Figure 9 showing determined values calculated by employing right and left wheel ratios after performing these corrections, that the determined values should generally be substantially 0 at the time of normal internal pressure and shifted from 0 at the time of pressure loss; however, in the case of determined values employing averaged values M of the right and left wheel ratios (indicated by X marks), the determined values will be largely shifted from 0 and be close to -0.1 when the vehicle speed approaches 200 Km/hour even if the internal pressure is normal. On the other hand, determined values after correction of the right and left wheel ratios by the quadratic function for the vehicle speed according to the present embodiment (indicate by white O marks) will scarcely be shifted from 0 even if the vehicle speed becomes large.

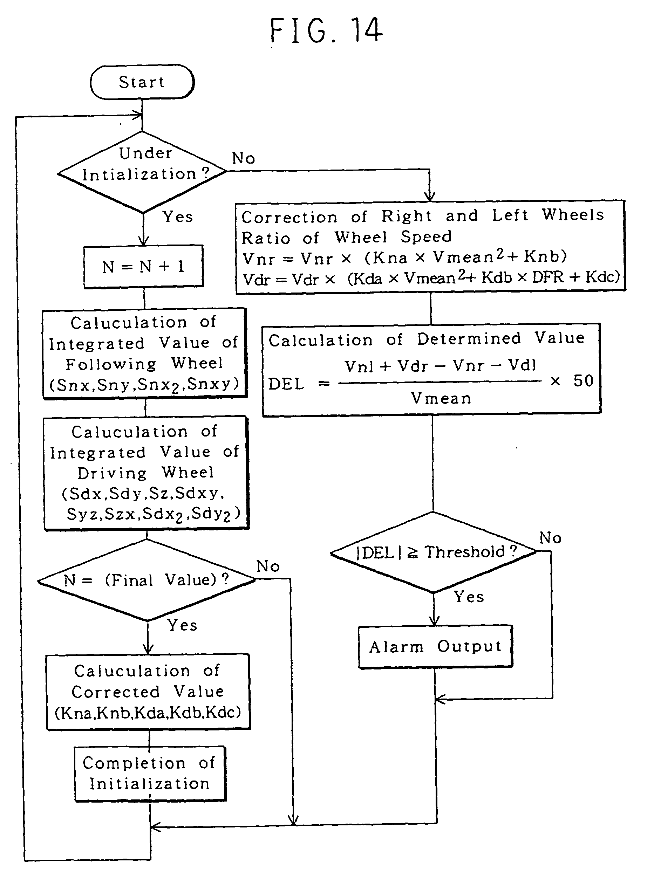

For this purpose, the control unit 2 comprises a wheel speed sensor 1 which is a rotational information detecting means for detecting the rotational information of each tyre Wᵢ; a storing means for storing the rotational information of each tyre W,; and relationships between right and left wheel ratios of right and left tyres of different types of following wheels which have preliminarily been made to be of normal air-pressure and vehicle speed; a calculating and processing means for calculating determined values from the rotational information of each tyre Wᵢ ; and a determining means for correcting right and left wheel ratios of following wheels at the time of actual running based on the relationship between the right and left wheel ratios of right and left tyres and vehicle speed and determining decrease in internal pressure of a tyre. An alarm is given when the thresholds of determined values exceed, e.g. a range of -0.1 to +0.1, based on the flowchart of Figure 14. With this arrangement, the accuracy of determining decrease in internal pressure of a tyre at the time of running at a high speed can be further improved compared to Embodiment 1, and erroneous alarm or failure in alarm can be prevented.

### EMBODIMENT 3

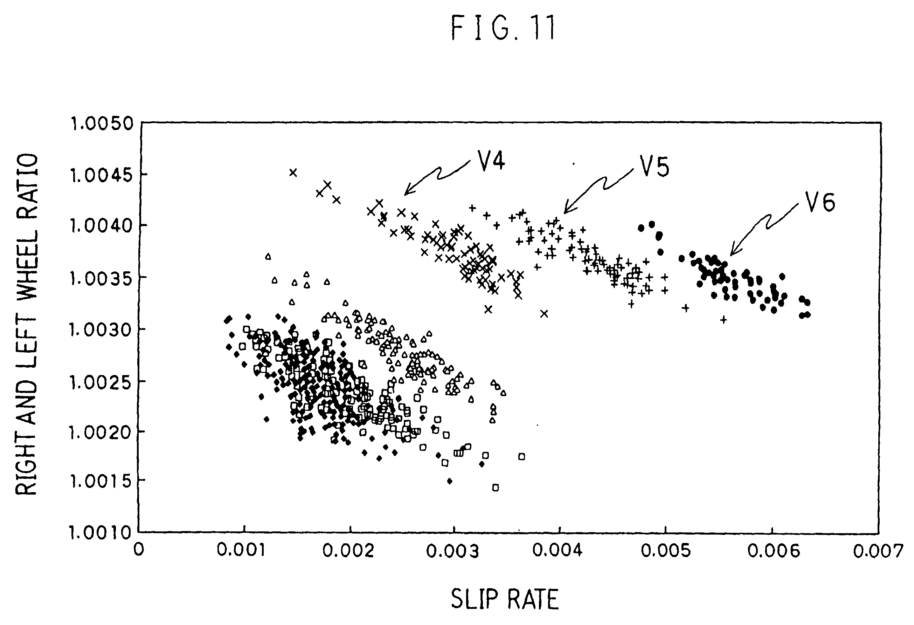

Another embodiment of the present invention will now be explained. While in Embodiment 1 relationships between right and left wheel ratios of driving wheels at straight-ahead running with tyres of normal internal pressure and driving force are stored when right and left tyres of different types are attached to the driving wheels, and the right and left wheel ratios of driving wheels are corrected by the use of the stored relationships, the relationship between right and left wheel ratios and slip rates is varied due to the vehicle speed in case the vehicle speed is not less than approximately 120 Km/hour (V₄ to V₆) as shown in Figure 11, and erroneous alarm or failure in alarm might undesirably occur.

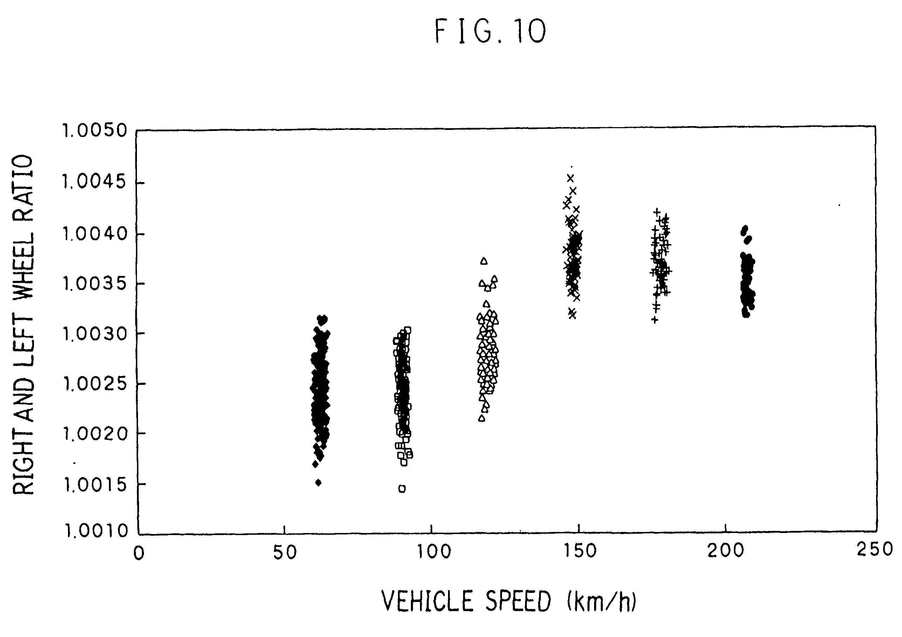

Thus, driving tests have been performed with a vehicle which is a rear wheel driving vehicle (FR vehicle) where the rear axle bears right and left tyres of different types, namely a new tyre and a worn tyres, and the driving speed is increased from 60 Km/hour by 30 Km/hour steps up to a speed of 210 Km/hour (V₁ to V₆). Consequently, it did not seem that there existed a correlation between the right and left wheel ratios with respect to the vehicle speed alone as shown in Figure 10. As already described, the relationships between the right and left wheel ratios and slip rates vary depending upon the vehicle speed in case the vehicle speed exceeds 120 Km/hour, and considering that the right and left wheel ratios is related to the vehicle speed as well as to the driving force, it can be understood in Figure 11 that it is in correlation with both the vehicle speed and driving force. Thus, correction values for the right and left wheel ratios of the driving wheels were selected based on the relationship thereof with the vehicle speed and the driving force.

Since the driving force as mentioned herein is equivalent to the slip rate, the driving force (DFR) can be expressed by the equation (front and rear wheel ratio - 1) = (Vd1+Vdr) / (Vn1+Vnr) -1.

Since the equation for correction is set to be as a linear function for the driving force in equation (6) of the afore-mentioned Embodiment 1, it can be expressed by the following equation (12). $Vdr = Vdr \times ( Kda \times DFR + Kdb )$

The correction coefficients are calculated by the following equations (13) and (14) through regression. $Kda = ( N \times Syz - Sdy \times Sz ) / N \times Sdy 2 - Sdy \times Sdy )$ $Kdb = ( Sz - Kda \times Sdy ) / N$

Note that
- Vdr:: revolution speed of right tyre of the driving wheels
- Kda:: quadratic correction coefficient for the vehicle speed
- Kdb:: correction coefficient for the driving force
- N:: number of data
- Syz:: integrated value of driving force and Vdr/Vdl
- Sdy:: integrated value of driving force
- Sz: integrated value of Vdr/Vdl
- Sdy2:: integrated value of a square of driving force
- Vdl:: revolution speed of left tyre of driving wheels

Since centrifugal force acts also on the driving tyres similarly to the case of the non-driving or following wheels, a quadratic relationship exists between the right and left wheel ratios of the driving wheels and the vehicle speed, similarly to the case of the following wheels.

In other words, the following equation (15) can be obtained as a linear combination function of a quadratic function for the vehicle speed in case the vehicle speed in which the vehicle speed with respect to the right and left wheel ratios is of zero slop and of a linear function for the driving force. $Vdr = Vdr \times ( Kda \times {Vmean}^{2} + Kdb \times DFR + Kdc )$

Note that
- Vdr:: revolution speed of right tyre of the driving wheels
- Vmean:: average value of revolution speeds of tyres of four wheels
- Kda:: quadratic correction coefficient for vehicle speed
- Kdb:: correction coefficient for driving force
- Kdc:: quadratic correction coefficient for vehicle speed and zero-order correction for driving force

Each of the correction coefficients can be obtained from the following equations (19) to (21) employing equations (16) to (18) by performing multiple regression of Vmean² and the driving force (DFR) with respect to Vdr/Vdl. $\begin{matrix}Ta = ( N \times Szx \times Sdy 2 \times Sdxy \times Sdy \times Sz + Sdx \times Sdy \times Syz - \\ Sdx \times Sdy 2 \times Sz - Szx \times Sdy \times Sdy - N \times Sdxy \times Syz )\end{matrix}$ $\begin{matrix}Tb = ( N \times Syz \times Sdx 2 + Sdxy \times Sdx \times Sz + Sdx \times Sdy \times Szx - \\ Sdy \times Sdx 2 \times Sz - Syz \times Sdx \times Sdx - N \times Sdxy \times Szx )\end{matrix}$ $\begin{matrix}Tc = ( N \times Sdx 2 \times SDY 2 - Sdx 2 \times Sdy \times Sdy - Sdy 2 \times Sdx \times Sdx - \\ N \times Sdxy \times Sdxy + 2 \times Sdxy \times Sdx \times Sdy )\end{matrix}$ $Kda = Ta / Tc$ $Kda = Ta / Tc$ $Kdc = Sz / N - Kda \times Sdx / N - Kdb \times Sdy / N$

Note that
- N:: number of data employed for the regressive calculation
- Sdx:: integrated value for a square of vehicle speed
- Sdy:: integrated value for driving force
- Sz:: integrated value for Vdr/Vdl
- Sdxy:: integrated value of a product of a square of vehicle speed and driving force
- Syz:: integrated value of driving force and Vdr/Vdl
- Szx:: integrated value of a product of Vdr/Vdl and a square of vehicle speed
- Sdx2:: integrated value of vehicle speed multiplied by four
- Sdy2:: integrated value of a square of driving force
- Vdl:: revolution speed of left tyre of the driving wheels
- Vdr:: revolution of right tyre of the driving wheels

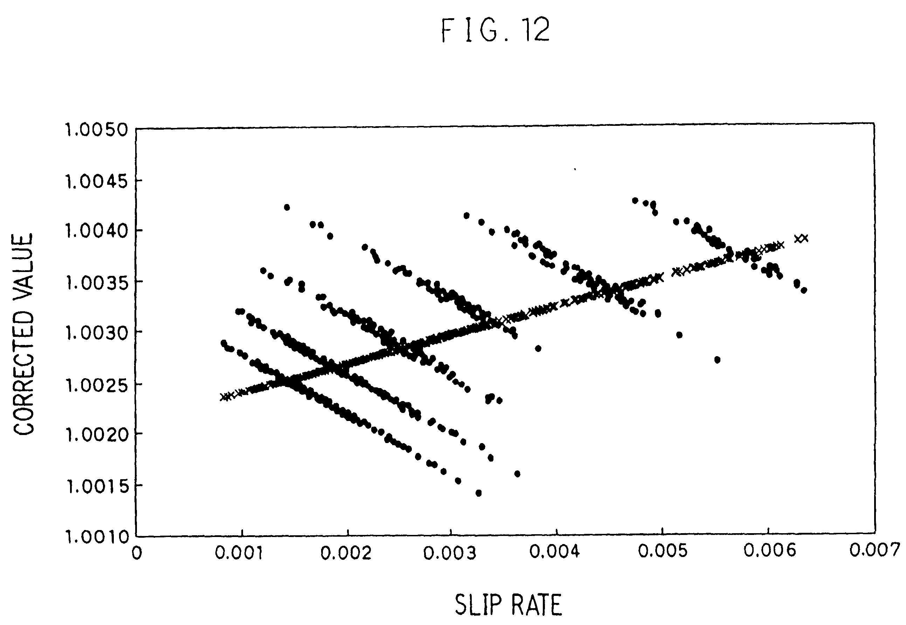

In Figure 12, there are respectively shown, by × marks and black ○ marks, corrected values obtained from a correction equation based on the driving force (slip rate) alone which are the corrected values of the preceding Embodiment 1 and corrected values obtained from a linear combination function of a quadratic function for the vehicle speed and a linear function for the driving force according to the present embodiment. It can be understood from Figure 12 that the influence of the vehicle speed is not included and the correlation with respect to the driving force does not exist at all in the preceding Embodiment 1. On the other hand, it is obvious that a negative slope with respect to the driving force is formed and favourable correlation with respect to the entire speed region is obtained, based on the fact that almost all of the points overlap with the original data of Figure 11.

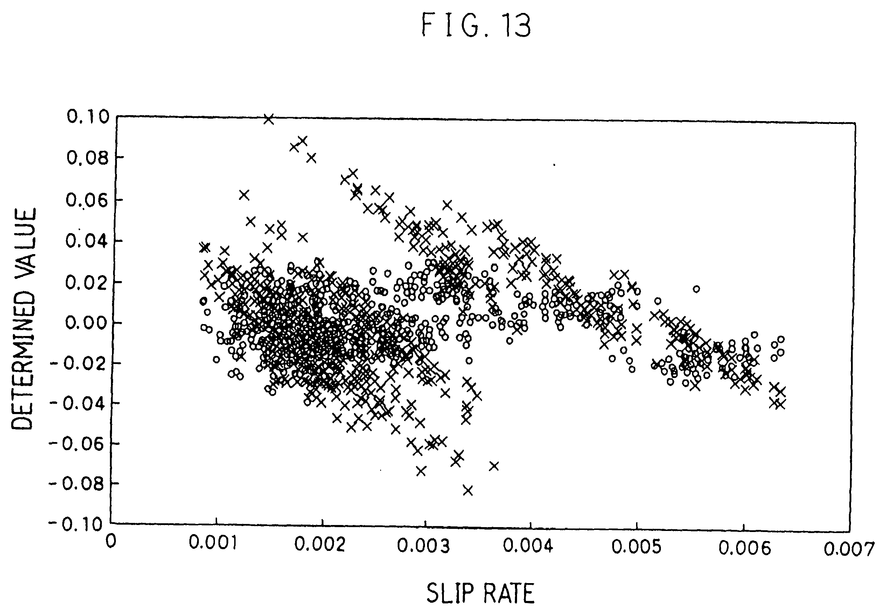

Determined values calculated by employing right and left wheel ratios after performing such correction are shown in Figure 13. While determined values according to this embodiment are included in a width of substantially ±0.04, they extend up to ±0.1 in case corrected values based on driving force alone are employed according to the Embodiment 1.

In this manner, the control unit 2 comprises a rotational information detecting means for detecting rotational information of each tyre Wᵢ; a storing means for storing rotational information of each tyre Wᵢ and relationships among right and left wheel ratios of right and left tyres of different types of driving wheels which have preliminarily been made at normal air-pressure, vehicle speed and driving force; a calculating and processing means for calculating determined values from the rotational information of each tyre Wᵢ; and a determining means for correcting right and left wheel ratios of driving wheels at the time of actual running based on the relationship among the right and left wheel ratios of right and left tyres of different types, vehicle speed and driving force and for determining decrease in internal pressure of a tyre. An alarm is given when the thresholds of determined values exceed, e.g. a rang of -0.1 to +0.1, based on the flowchart of Figure 14. With this arrangement, the accuracy of determining decrease in internal pressure of a tyre at the time of running at high speed can be further improved compared to Embodiment 1, and erroneous alarm or failure in alarm can be prevented.

As explained so far, according to the present invention, the right and left wheel ratios of non-driven wheels and driven wheels at the time of actual running can be accurately corrected since they are preliminarily stored during initialisation performed by actually running at the time of, for instance, exchanging a tyre, how the right and left wheel ratios (relative speed ratios) of right and left tyres of different type of driving wheels and slip rates due to driving force vary, since relationships between the right and left wheel ratios (relative speed ratios) of right and left tyres of different types of following wheels and vehicle speeds are preliminarily stored, and since relationships among the right and left wheel ratios (relative speed ratios) of right and left tyres of different types of driving wheels, driving force (slip rate) and vehicle speeds are preliminarily stored. Consequently, the accuracy for determining decrease in internal pressure of a tyre can be improved, and erroneous alarm or failure in alarm can be prevented.

## Claims

1. An apparatus for alarming decrease in internal air pressure of a tyre based on rotation information obtained from tyres attached to a four-wheeled vehicle, comprising a rotational information detecting means for detecting rotational information of each tyre; a calculating and processing means for calculating determined values from rotational information of each tyre; **characterised by** further comprising a storing means for storing the rotational information of each tyre and relationships between relative speed ratios of right and left tyres of different types of wheels which have been preliminarily set to be of normal air-pressure and a determining means for correcting relative speed ratios of right and left tyres of different types of wheels at the time of actual running based on the stored relationship between the relative speed ratio of right and left tyres of different types of wheels and for determining decrease in internal pressure of a tyre.

2. An apparatus for alarming decrease in internal air pressure of a tyre according to claim 1, **characterised in that** the determining means corrects a relative speed ratio of driving wheels at the time of actual running based on a preliminarily stored relationship between the relative speed ratio of right and left tyres of different types of driving wheels and driving force.

3. An apparatus for alarming decrease in internal air-pressure of a tyre according to claim 1, **characterised in that** the determining means corrects a relative speed ratio of driving wheels at the time of actual running based on a preliminarily stored relationship among the relative speed ratio of right and left tyres of different types of driving wheels, vehicle speed and driving force.

4. An apparatus for alarming decrease in internal air-pressure of a tyre according to claim 1, **characterised in that** the determining means corrects a relative speed ratio of non-driven or following wheels at the time of actual running based on a preliminarily stored relationship between the relative speed ratio of right and left tyres of different types of non-driven or following wheels and vehicle speed.

5. A method for alarming decrease in internal air-pressure of a tyre based on rotational information obtained from tyres attached to a four-wheeled vehicle, **characterised in that** a relative speed ratio of right and left tyres different types of wheels at the time of actual running is corrected based on a preliminarily stored relationship between the relative speed ratio of right and left tyres of different types of wheel which have been set to be normal air pressures and decrease in internal pressure of a tyre is determined.

6. A method for alarming decrease in internal air pressure of a tyre according to claim 5, **characterised in that** a relative speed ratio of driving wheels at the time of actual running is corrected based on a preliminarily stored relationship between the relative speed ratio of right and left tyres of different types of driving wheels and driving force.

7. A method for alarming decrease in internal air-pressure of a tyre according to claim 5, **characterised in that** a relative speed ratio of driving wheels at the time of actual running is corrected based on a preliminarily stored relationship among the relative speed ratio of right and left tyres of different types of driving wheels, vehicle speed and driving force.

8. A method for alarming decrease in internal air-pressure of a tyre according to claim 5, **characterised in that** a relative speed ratio of non-driven or following wheels at the time of actual running is corrected based on a preliminarily stored relationship between the relative speed ratio of right and left tyres of different type of non-driven or following wheels and vehicle speed.

## Patentansprüche

1. Vorrichtung zum Warnen vor einer Abnahme eines Innenluftdruckes eines Reifens auf der Basis von Rotationsinformation, die von an einem vierrädrigen Fahrzeug angebrachten Reifen erhalten wird, mit einem Rotationsinformations-Detektionsmittel zum Detektieren von Rotationsinformation von jedem Reifen und einem Berechnungs- und Verarbeitungsmittel zum Berechnen bestimmter Werte aus der Rotationsinformation von jedem Reifen;
**dadurch gekennzeichnet, dass** sie darüber hinaus ein Speichermittel zum Speichern der Rotationsinformation von jedem Reifen und von Beziehungen zwischen Relativgeschwindigkeitsverhältnissen von rechten und linken Reifen unterschiedlicher Typen von Rädern, die vorbereitend als auf einem normalen Luftdruck befindlich festgelegt worden sind, und ein Bestimmungsmittel zum Korrigieren von Relativgeschwindigkeitsverhältnissen von rechten und linken Reifen unterschiedlicher Typen von Rädern zu dem Zeitpunkt einer tatsächlichen Fahrt auf der Basis der gespeicherten Beziehung zwischen dem Relativgeschwindigkeitsverhältnis von rechten und linken Reifen unterschiedlicher Typen von Rädern und zum Bestimmen einer Abnahme eines Innendruckes eines Reifens umfasst.

2. Vorrichtung zum Warnen vor einer Abnahme eines Innenluftdruckes eines Reifens nach Anspruch 1, **dadurch gekennzeichnet, dass** das Bestimmungsmittel ein Relativgeschwindigkeitsverhältnis von treibenden Rädern zu dem Zeitpunkt einer tatsächlichen Fahrt auf der Basis einer vorbereitend gespeicherten Beziehung zwischen dem Relativgeschwindigkeitsverhältnis von rechten und linken Reifen unterschiedlicher Typen von treibenden Rädern und einer Antriebskraft korrigiert.

3. Vorrichtung zum Warnen vor einer Abnahme eines Innenluftdruckes eines Reifens nach Anspruch 1, **dadurch gekennzeichnet, dass** das Bestimmungsmittel ein Relativgeschwindigkeitsverhältnis von treibenden Rädern zu dem Zeitpunkt einer tatsächlichen Fahrt auf der Basis einer vorbereitend gespeicherten Beziehung zwischen dem Relativgeschwindigkeitsverhältnis von rechten und linken Reifen unterschiedlicher Typen von treibenden Rädern, der Fahrzeuggeschwindigkeit und der Antriebskraft korrigiert.

4. Vorrichtung zum Warnen vor einer Abnahme eines Innenluftdruckes eines Reifens nach Anspruch 1, **dadurch gekennzeichnet, dass** das Bestimmungsmittel ein Relativgeschwindigkeitsverhältnis von nicht angetriebenen oder mitlaufenden Rädern zu dem Zeitpunkt einer tatsächlichen Fahrt auf der Basis einer vorbereitend gespeicherten Beziehung zwischen dem Relativgeschwindigkeitsverhältnis von rechten und linken Reifen unterschiedlicher Typen von nicht angetriebenen oder mitlaufenden Rädern und der Fahrzeuggeschwindigkeit korrigiert.

5. Verfahren zum Warnen vor einer Abnahme eines Innenluftdruckes eines Reifens auf der Basis von Rotationsinformation, die von an einem vierrädrigen Fahrzeug angebrachten Reifen erhalten wird, **dadurch gekennzeichnet, dass** ein Relativgeschwindigkeitsverhältnis von rechten und linken Reifen unterschiedlicher Typen von Rädern zu dem Zeitpunkt einer tatsächlichen Fahrt auf der Basis einer vorbereitend gespeicherten Beziehung zwischen dem Relativgeschwindigkeitsverhältnis von rechten und linken Reifen unterschiedlicher Typen von Rädern, die vorbereitend als auf einem normalen Luftdruck befindlich festgelegt worden sind, korrigiert wird, und eine Abnahme eines Innendruckes eines Reifens bestimmt wird.

6. Verfahren zum Warnen vor einer Abnahme eines Innenluftdruckes eines Reifens nach Anspruch 5, **dadurch gekennzeichnet, dass** ein Relativgeschwindigkeitsverhältnis von treibenden Rädern zu dem Zeitpunkt einer tatsächlichen Fahrt auf der Basis einer vorbereitend gespeicherten Beziehung zwischen dem Relativgeschwindigkeitsverhältnis von rechten und linken Reifen unterschiedlicher Typen von treibenden Rädern und der Antriebskraft korrigiert wird.

7. Verfahren zum Warnen vor einer Abnahme eines Innenluftdruckes eines Reifens nach Anspruch 5, **dadurch gekennzeichnet, dass** ein Relativgeschwindigkeitsverhältnis von treibenden Rädern zu dem Zeitpunkt einer tatsächlichen Fahrt auf der Basis einer vorbereitend gespeicherten Beziehung zwischen dem Relativgeschwindigkeitsverhältnis von rechten und linken Reifen unterschiedlicher Typen von treibenden Rädern, der Fahrzeuggeschwindigkeit und der Antriebskraft korrigiert wird.

8. Verfahren zum Warnen vor einer Abnahme eines Innenluftdruckes eines Reifens nach Anspruch 5, **dadurch gekennzeichnet, dass** ein Relativgeschwindigkeitsverhältnis von nicht angetriebenen oder mitlaufenden Rädern zu dem Zeitpunkt einer tatsächlichen Fahrt auf der Basis einer vorbereitend gespeicherten Beziehung zwischen dem Relativgeschwindigkeitsverhältnis von rechten und linken Reifen unterschiedlicher Arten von nicht angetriebenen oder mitlaufenden Rädern und der Fahrzeuggeschwindigkeit korrigiert wird.

## Revendications

1. Appareil concernant la détection d'une baisse de la pression d'air interne d'un pneumatique sur la base de données de rotation obtenues à partir de roues montées sur un véhicule à quatre roues, l'appareil comprenant des moyens de détection de données de rotation pour détecter des données de rotation relatives à chaque pneumatique ; des moyens de calcul et de traitement pour calculer des valeurs déterminées à partir de données de rotation relatives à chaque pneumatique ; **caractérisé en ce qu'**il comprend en outre des moyens d'enregistrement pour enregistrer les données de rotation relatives à chaque pneumatique et des relations entre des rapports de vitesse relative de pneumatiques droits et gauches de différents types de roues qui ont été programmés au préalable comme étant gonflés à une pression d'air normale ; et des moyens de détermination pour corriger des rapports de vitesse relative de pneumatiques droits et gauches de différents types de roues au moment du fonctionnement réel sur la base de la relation enregistrée entre les rapports de vitesse relative de pneumatiques droits et gauches de différents types de roues, et pour déterminer une baisse de la pression d'air interne d'un pneumatique.

2. Appareil concernant la détection d'une baisse de la pression d'air interne d'un pneumatique selon la revendication 1, **caractérisé en ce que** les moyens de détermination corrigent un rapport de vitesse relative de roues d'entraînement au moment du fonctionnement réel sur la base de la relation enregistrée au préalable entre les rapports de vitesse relative de pneumatiques droits et gauches de différents types de roues et une force d'entraînement.

3. Appareil concernant la détection d'une baisse de la pression d'air interne d'un pneumatique selon la revendication 1, **caractérisé en ce que** les moyens de détermination corrigent un rapport de vitesse relative de roues d'entraînement au moment du fonctionnement réel sur la base de la relation enregistrée au préalable entre les rapports de vitesse relative de pneumatiques droits et gauches de différents types de roues, la vitesse de déplacement réel du véhicule et une force d'entraînement.

4. Appareil concernant la détection d'une baisse de la pression d'air interne d'un pneumatique selon la revendication 1, **caractérisé en ce que** les moyens de détermination corrigent un rapport de vitesse relative de roues menées, ou roues suiveuses, au moment du fonctionnement réel sur la base de la relation enregistrée au préalable entre les rapports de vitesse relative de pneumatiques droits et gauches de différents types de roues menées, ou roues suiveuses, et une vitesse de déplacement réel du véhicule.

5. Procédé concernant la détection d'une baisse de la pression d'air interne d'un pneumatique sur la base de données de rotation obtenues à partir de roues montées sur un véhicule à quatre roues, **caractérisé en ce qu'**un rapport de vitesse relative de pneumatiques droits et gauches de différents types de roues au moment du fonctionnement réel, est corrigé sur la base d'une relation enregistrée au préalable entre les rapports de vitesse relative de pneumatiques droits et gauches de différents types de roues qui ont été programmés au préalable comme étant gonflés à une pression d'air normale, et qu'une baisse de la pression interne d'un pneumatique est déterminée.

6. Procédé concernant la détection d'une baisse de la pression d'air interne d'un pneumatique selon la revendication 5, **caractérisé en ce qu'**un rapport de vitesse relative de roues d'entraînement au moment du fonctionnement réel est corrigé sur la base d'une relation enregistrée au préalable entre les rapports de vitesse relative de pneumatiques droits et gauches de différents types de roues et une force d'entraînement.

7. Procédé concernant la détection d'une baisse de la pression d'air interne d'un pneumatique selon la revendication 5, **caractérisé en ce qu'**un rapport de vitesse relative de roues d'entraînement au moment du fonctionnement réel est corrigé sur la base d'une relation enregistrée au préalable entre les rapports de vitesse relative de pneumatiques droits et gauches de différents types de roues, la vitesse de déplacement réel du véhicule et une force d'entraînement.

8. Procédé concernant la détection d'une baisse de la pression d'air interne d'un pneumatique selon la revendication 5, **caractérisé en ce qu'**un rapport de vitesse relative de roues menées, ou roues suiveuses, au moment du fonctionnement réel est corrigé sur la base d'une relation enregistrée au préalable entre les rapports de vitesse relative de pneumatiques droits et gauches de différents types de roues menées, ou roues suiveuses, et une vitesse de déplacement réel du véhicule.
